# EUROPEAN PATENT SPECIFICATION

(11) **EP 3 827 335 B1**
(45) Date of publication and mention of the grant of the patent: **08.11.2023**
(21) Application number: 19745135.4
(22) Date of filing: 25.07.2019
(51) Int. Cl.: G06F 8/40

(54) **PROCESSING METHOD USING BINARY INTERMEDIATE REPRESENTATIONS**
VERARBEITUNGSVERFAHREN UNTER VERWENDUNG BINÄRER ZWISCHENDARSTELLUNGEN
PROCÉDÉ DE TRAITEMENT METTANT EN OEUVRE DES REPRÉSENTATIONS BINAIRES INTERMÉDIAIRES

(30) Priority: 25.07.2018 GB 201812150
(43) Date of publication of application: 02.06.2021
(73) Proprietor: THE OPEN UNIVERSITY, Milton Keynes MK7 6AA (GB)
(72) Inventor: YU, Yijun, Milton Keynes Buckinghamshire MK7 6AA (GB)
(74) Representative: Mewburn Ellis LLP
(86) International application number: PCT/EP2019/070133
(87) International publication number: WO 2020/021047

(56) References cited:
- AHO A V ET AL: "Compiler - Principles, Techniques, and Tools", 1 January 1986 (1986-01-01), COMPILERS. PRINCIPLES, TECHNIQUES, AND TOOLS, READING, ADDISON-WESLEY PUBLISHING CO, US, PAGE(S) COMPLETE48, XP002200775, page 10, line 5 - page 19, line 17; figures 1.9,1.10,1.11
- KELLER G ET AL: "Flattening trees", EURO-PAR. PARALLEL PROCESSING. INTERNATIONAL EURO-PARCONFERENCE. PROCEEDINGS, XX, XX, 1 January 1998 (1998-01-01), pages 709-719, XP002410176,

## Description

### TECHNICAL FIELD OF THE INVENTION

The present invention relates to a computer-implemented method of processing data using binary intermediate representations.

### BACKGROUND TO THE INVENTION

Many common software engineering activities such as patching, slicing and refactoring require the analysis of source code, which is usually expressed in textual form for human comprehension. This source code requires parsing, which, in the present application, should be understood to mean the decoding of source code into a structural representation. Parsing may include checking the source code for the correct syntax. Software components which perform parsing are referred to herein as "parsers". Parsers often transform source code into abstract syntax trees (ASTs), for subsequent static analysis and program transformations such as program slicing etc. As software systems evolve, their source code structures grow in size, which necessarily requires a longer parsing time. In addition to this, it also takes longer to examine accurately structural differences of code artefacts before and after changes were introduced (e.g. differencing).

To support these software engineering activities, automated tools such as compilers need to manipulate the source code as an intermediate representation. An intermediate representation is a data structure or code used to represent source code in a manner which is conducive to further processing. In general, parsing is required each time a tool analyses the source code, intermediate representations are often stored persistently, in order to avoid the need to parse the source code again. It is desirable for intermediate representations to be both accurate in that they represent the source code without loss of information, and also independent of the language of the source code.

In addition to accuracy and independence, intermediate representations should also satisfy the following requirements:
(i) **Expressive:** the intermediate representation should express (recursive) source code structures of any mainstream programming language.
(ii) **Efficient:** the intermediate representations should be loadable onto memory as quickly as possible.
(iii) **Interoperable:** it should be possible to manipulate the intermediate representation by any analysis tool through an application programming interface (API).

Table 1 below shows the attributes of some known intermediate representation techniques: gcc¹, srcML², yaxx³, txl⁴, and antlr⁵. As is clear, none of the known techniques demonstrate the three desired qualities of expressivity, efficiency and interoperability.

**Table 1: Comparison of known intermediate representation techniques.**

| **Requirement** | **gcc** | **srcML** | **yaxx** | **txl** | **antlr** |
|---|---|---|---|---|---|
| **(i)** | *N* | *Y* | *Y* | *Y* | *Y* |
| **(ii)** | *N* | *N* | *N* | *N* | *N* |
| **(iii)** | *N* | *Y* | *Y* | *N* | *N* |

¹ Some compilers support multiple languages in a family, e.g. gcc/clang.
² http://srcml.org: M. L. Collard, M. J. Decker, and J. I. Maletic, "Lightweight transformation and fact extraction with the srcML toolkit," in 11th IEEE Working Conference on Source Code Analysis and Manipulation, SCAM 2011, Williamsburg, VA, USA, September 25-26, 2011. IEEE Computer Society, 2011, pp. 173-184.
³ http://sf.net/projects/yaxx: J. Levine, flex & bison. O'Reilly Media, Aug 2009.

The present invention aims to address the issues which arise from the known intermediate representation techniques set out in Table 1 to provide methods and systems which allow the requirements (i) to (iii) to be met.

Aho et al., Compiler - Principles, Techniques & Tools (1986) describes a compiling process in general terms, with references to a syntax analyzer, an intermediate code generator, and a code optimizer. Keller G et al., Flattening trees, EURO-PAR. PARALLEL ROCESSING. INTERNATIONAL EURO-PARCONFERENCE, 1998, pages 709-719, describes tree flattening by program transformations, so-called flattening transformations, and such a transformation changes the representation of data structures such that vectors contain only elements of base type, and replaces all polymorphic vector primitives with monomorphic instances.

### SUMMARY OF THE INVENTION

At its most general, the present invention provides a computer-implemented method which uses binary intermediate representations in order to speed up the parsing/loading process whilst preserving expressive structures such as hierarchical abstract syntax trees (ASTs). The invention includes the combination of the aspects and preferred features described except where such a combination is clearly impermissible or expressly avoided. Specifically, a first aspect of the present invention provides a computer-implemented method as set out in claim 1.

In some embodiments of the invention, the method may further include a "precursor" step of generating a receiver for the source code. Specifically, all types of source code have an associated grammar, which is a set of rules which defines the programming language in which the source code is written. In other words, a programming language is defined based on a set of rules which determines how parsers decipher a sequence of tokens of a program into a nested tree. A production rule, e.g., has a left-hand side corresponding to a tree node, and a sequence of right hand side nodes corresponding to the children of the tree node on the left-hand side. Through the parsing, the root of the resulting parsing tree will be the entire program, whilst the leaves of the tree will correspond to the concrete tokens analysed by the lexical analysis (which chops the sequence of characters into a sequence tokens). Different programming languages such as C, Java, Python etc. follow different grammars, so they require different parsers, and they also have different reserved tokens (keywords). Accordingly in some embodiments of the present invention, the receiver is generated based on the grammar of the source code.

Binary representations are efficient intermediate representations because they are closer to machine in representation, which enable reducing of hierarchically recursive structures into an interoperable form with other programming tools. In particular, binary intermediate representations are very easily navigated. The step of generating the binary intermediate representation includes (i) parsing the source code to generate a first intermediate representation and (ii) generating the binary representation of the source code based on the first intermediate representation.

According to the present invention, the first intermediate
representation of the source code is in the form of a syntax tree, which means, in the present context, a tree representation of the source code, or a hierarchical tree-like structure. Specifically, the syntax tree is in the form of an abstract syntax tree (AST). An abstract syntax tree is different from, say, a concrete syntax tree in that it focuses on rules embodied in the source code rather than the specific elements of the code itself. Put differently, the rules embodied in the source code are implicit in the structure of the tree itself.

In preferred embodiments of the present invention, the source code or the first intermediate representation of the source code may be represented in the form of semi-structured data, for example using XML tags. The XML representation may follow an XML schema such as SrcML, to present the code in an XML format. Alternatively, the first intermediate representation of the source code may be represented in a JSON format. JSON is a more efficient representation than XML, however, both cases still give rise to redundancies. In order to address this redundancy issue, the present invention may generate a binary intermediate representation of the source code based on the first intermediate representation, whether it be in XML format, JSON format, or any other representation of the semi-structured data arising as a result of parsing the source code.

In order to increase the speed with which subsequent processing can be performed on the data, the step of generating the binary intermediate representation of the source code includes flattening the source code or the first intermediate representation of the source code.

As the skilled person readily understands, the term "binary" refers to a series of 1s and 0s. This series of 1s and 0s can be considered as a one-dimensional tape or array, having a finite length. A single 0 or 1 is a "bit" and eight bits is a "byte". A binary array of N bits can represent 2^{N} different kinds of numbers. For example, one byte can represent 2⁸ = 256 numbers. As a result, it is possible to use bytes to represent the alphabet, as per the ASCII standard. However, many binary data do not follow the ASCII standard, and therefore do not refer to human readable characters. In the present invention, binary is used effectively as a more general data format than ASCII. In the present application, the ASCII format is referred to as a "textual" format.

In the present application, the binary representation is preferably defined in terms of fields, each field having an associated offset relative to a predetermined location within the array, such as the beginning of the array, and a length of at least one bit. The length of said field may depend on the number of bits required to represent the information to be stored in that field. The entire binary data may be divided into an array including:
▪ Integer numbers (e.g. four bytes for a number as large as 2³² = 4294967296)
▪ Enumerations types (e.g. a single bit to represent a TRUE or FALSE value)
▪ Strings (e.g. one byte per character of the string)

Using a binary representation as outlined above, means that the program code can be made more compact to store than the textual format, and thus more efficient to index and fetch from storage into the computer memory. The binary intermediate representation is preferably generated based on a predetermined schema, the schema describing how data is to be organized in the binary intermediate representation. As will be discussed in greater detail later on, the schema is preferably a nested or recursive schema.

For improved applicability and flexibility, it is preferable that the predetermined schema is agnostic to the grammar of the source code. This effectively means that the same schema may be used for source code independent of the programming language in which that source code is written. The schema may be generated from a modified version of the ANTLR parser-generator. As the skilled person is aware, a parser-generator is a tool which, based on a given set of rules (i.e. a grammar), generates a parser or compiler for use with source code written in a programming language adopting that grammar. This may be done, for example, by associating executable code with each of the rules of the grammar that should be executed when these rules are applied by the parser.

The step of flattening may be performed by an application programming interface, specifically a flattening application programming interface (herein "flattening API"). The term API refers to a list or standardized way of accessing the functions of a programming library. Typically, an API is a collection of function declarations (i.e. zero to many input data and their data types in a particular order, plus zero or one output data and its data type). Users of the API do not need to know how the functions are implemented, they only need to use the function in the way the function declaration specifies. In other words, they need to provide the correct input data type in the right order, and to expect the output of the expected data type.

In the context of the present invention, the flattening API is generated based on the predetermined schema. Specifically, the flattening API may be generated based on the predetermined schema using a schema compiler. The flattening API, in addition to flattening the source code, or the first intermediate representation of the source code, may also be configured to save the resulting binary intermediate representation to a memory. The API may also be configured to load the source code or first intermediate representation of the source code from a memory.

Another category of API may provide builder functions, configured to assemble fields into structures in an ordered function. By traversing the first intermediate representation or source code (e.g. an AST) in a depth first ordering, such builder functions could be used to assemble the binary tokens into a stream of well-offset binary 0s and 1s. These builder functions are provided based on the predetermined schema, so it is possible to automate the traversals for any AST data following the schema (e.g. a recursive schema). In other words, the step of generating the binary intermediate representation may include the steps of:
generating binary sub-arrays for child fields;
assembling the generated binary sub-arrays; and
adjusting the offsets accordingly.

The first intermediate representation is in the form of an
AST, and the step of generating the binary intermediate representation includes flattening the AST to generate a flattened abstract syntax tree (fAST). In the present application the term "flattening" refers to the flattening of the hierarchical abstract syntax tree into the one-dimensional array of 0s and 1s. The step of generating the binary intermediate representation by flattening or otherwise includes serializing the first intermediate representation, which may be in the form of semi-structured data into one or more binary arrays. Such binary formats are readable by well-defined protocols or schemas.

In some embodiments, the step of flattening may be performed using protocol buffers (protobuf or "PB" hereafter) methods, to generate a fAST/PB representation. Specifically, the schema compiler may be based on protocol buffers. In such embodiments, the semi-structured data of the first representation is flattened into a stream of messages, each of the messages being in binary form. This stream of messages forms the binary representation, and is "flattened" because it is no longer in semi-structured, or hierarchical form, but binary form. In such embodiments, the data representing the source code or the first intermediate representation may be grouped by sub-structures, the sub-structures referring to each other through pointers. In preferred embodiments, the points may be stored explicitly as memory addresses (such as a 64 bit integer number to index the entire address space. fAST/PB representations such as this are advantageous because the data fields can shuffle around in arbitrary ordering because the pointers can navigate to any address in memory). This means that e.g. a syntax tree need not be traversed in a specific order. fAST/PB, generated using protocol buffers has a similar structure to textual tree nodes, but has a more compact representation of field types. For example, in an XML representation including the line "DECL = 2", instead of a textual "decl" element (which is 4 bytes), only a "2" is recorded in the fAST/PB representation (which is only 1 byte). Representations such as fAST/PB exhibit a greater degree of nesting than semi-structured representations such as XML.

In other embodiments, the step of flattening may be performed using flattened buffers (flatbuf or "FBS" hereafter) methods, to generate a fAST/FBS representation. Specifically, the schema compiler may be based on flattened buffers. In such embodiments the fAST representation may be in the form of a single binary array. The binary array preferably represents a nested or recursive schema. The binary array in such embodiments does not require explicit pointers; instead, the binary array may include fields representing an offset. The offset may be used to identify the location of another field in the array. fAST/FBS generated using flattened buffers have a completely different structure from the textual tree. Specifically, in embodiments in which the fAST is generated using flattened buffers, the semi-structured first intermediate representation is converted into a one-dimensional array. In such an array, the pointers of e.g. the abstract syntax tree forming the first intermediate representation are replaced with offset integer numbers to the array elements. Such a representation can be traversed in the same manner as a tree is traversed, following integer offsets rather than following the pointers.

When using either protocol buffers or flattened buffers, the step of generating the binary intermediate representation includes serializing the semi-structured data of the first intermediate representation into a binary format. Such binary formats are readable by well-defined protocols or schemas. From the above simple examples, it should be clear that as the binary representation becomes more complex (i.e. the fAST representation employing the fAST schema), the calculation of the offset is more complex. So, in some embodiments, API code generated from the recursive schema is configured to handle the fetching of fields of the binary structure efficiently, so that they can be accessed as if using pointers, e.g. as in the AST structure.

Furthermore, the term "nested" or "recursive" in the present context means that the schema can include fields which themselves may be defined by the same schema. This is illustrated in the example below.

A schema defines the structure of how data records are organized. Typically, a schema is fixed for a type of table or database even when the data content of that table or database varies. For example, a schema:
(String name, int32 age, Gender gender)
may be defined based on fixed types, where String is a sequence of bytes representing characters, int is a data type of four byte integer numbers, Gender is defined as an enumeration of genders, such as MALE = 1; FEMALE = 2. Then, ("Yijun Yu", 45, 0) could be the content of the record in question, which is different from another person's data record. In the present invention, the schema (referred to herein as the "fAST schema") is configured to allow a record to contain a field of the same structure as that record, in other words the schema is preferably a recursive or nested structure. Put another way, the tree may contain a number of children, in which each of the children is a tree itself (i.e. can contain its own children). By storing the fAST schema with this recursive nature, it is possible to assemble one dimensional arrays (binaries) inside a bigger one-dimensional array (binary) as long as the offsets of its fields are updated to be new offsets of the bigger binary accordingly.

This is illustrated in the following example. Consider a schema:
Person(String name, int32 age, Gender gender, repeated Person child)

This is an example of recursion. In a textual format, the non-nested structure could be expressed as:

| offset | length | NAME | offset | length | AGE | offset | length | GENDER |
|---|---|---|---|---|---|---|---|---|
| 0 | 64 | YIJUN () Y U | 64 | 32 | 000 45 | 96 | 1 | 0 |

Above, the offsets and the lengths are counting bits, and characters such as "Y" are represented as a binary number. Here, for example, Y would be represented by binary number 89. It should be noted that the age 45 is represented by 32 bits.

Suppose a child of the same person is added as ("Edward Yu", 14, 0), which would be "translated" as:

| offset | length | NAME | offset | length | AGE | offset | length | GENDER |
|---|---|---|---|---|---|---|---|---|
| 0 | 72 | E D W A R () Y U D | 62 | 32 | 0 0 0 14 | 104 | 1 | 0 |

This "child" can then be nested with the parent as follows.

| | | | | | | | | | | | | | | | | | | | | |
|---|---|---|---|---|---|---|---|---|---|---|---|---|---|---|---|---|---|---|---|---|
| 0 | 72 | Y I J U N () YU | 64 | 32 | 0 0 0 45 | 96 | 1 | 0 | 97 | 32 | 0001 | 129 | 72 | EDWARD() YU | 201 | 32 | 00014 | 233 | 1 | 0 |

Please note that in the above tables, "()" represents a SPACE.

In addition to the data for Yijun and Edward, to represent the nested relationship, the structure has to also include the length of the vector of the children (i.e. 1) which is stored as a 32 bit integer in this case. Of course, in this example, it is somewhat unlikely that a person will have 2³² children. However, in the more general case, when the schema is fixed and the number of children of a tree node is not predefined, in which case int32 is used.

Once the binary intermediate representation has been generated, it may be accessed via accessor functions, preferably provided by an API. In other words, instead of providing offsets (which are complex due to the complexity of the schema), users are able to obtain or modify the data by the meaningful names of the fields symbolically instead.

Embodiments of the present invention may have applications in genome sequencing. In such cases, the source code may be in the form of raw data representing a genome sequence. Specifically, the source code may be in the form of a FASTA⁶ representation, in which the nucleotide bases (in either DNA or RNA) are listed using the letters, A, C, T, G and U. For high-throughput in genome sequencing, multiple segments of a sequence need to be joined together through an alignment/mapping process. For example, the 3rd base in sequence segment B may be corresponding to the 100th acid in sequence segment A, so that the merged raw sequence (A; B) can be joined by discarding the first two acids in B and the last acids after 100th base in A. By expressing these alignments and mappings, the metadata are more structured than the "raw", i.e. FASTA-expressed sequences. The expressed alignments and mappings are stored in SAM and BAM formats, which are described at e.g. http://samtools.aithub.io/hts-specs/, as an evolving standard. A SAM file is tab-delimited text file that contains sequence-alignment data. A BAM file is the binary compression version of a SAM file on top of the standard gzip file format (BGZF).
⁶ Lipman, DJ; Pearson, WR (1985). "Rapid and sensitive protein similarity searches". Science. 227 (4693): 1435-41. doi:10.1126/science.2983426. PMID 2983426.

Protocol buffers such as protobuf may be used to record the alignments in the so-called "Goby" format, which is a data management framework designed to facilitate the implementation of efficient data analysis pipelines⁷. In some embodiments, by using protobuf on e.g. the structured metadata in the SAM/BAM formats, to record the alignments in the Goby format, it is possible to achieve a further compression ratio of around 20% for storage, and around 100% for loading time⁸.
⁷ Goby https://github.com/CampagneLaboratory/goby; Sequence Alignment/Map Format Specification, 14 May 2019, http://samtools.github.io/hts-specs/SAMv1.pdf
⁸ Fabien Campagne, Kevin C. Dorff, Nyasha Chambwe, James T. Robinson, Jill P. Mesirov. "Compression of Structured High-Throughput Sequencing Data", PLOS One. 2013; 8(11):e79871. doi:10.1371/journal.pone.0079871.

Accordingly, the present invention may include a step of converting the source code into a SAM or BAM representation, and using protocol buffers to convert the SAM or BAM representation into a Goby representation. In some embodiments, the Goby format may be in the form of an abstract syntax tree. Then, the method may include the step of flattening the Goby representation to generate a flattened Goby representation. This turns the records of metadata of the alignment/mappings (i.e. the SAM and BAM representations) into a one dimensional array. It has been shown that experiments using C elegans (96 million bases) and Human Genome H19 (3,243 million bases), the flattened Goby representation can be processed five times quicker than the Goby representation.

Further optional features of the invention are set out below.

### BRIEF DESCRIPTION OF THE DRAWINGS

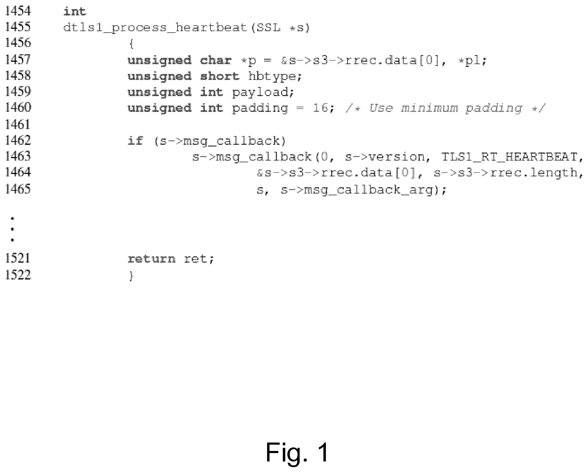

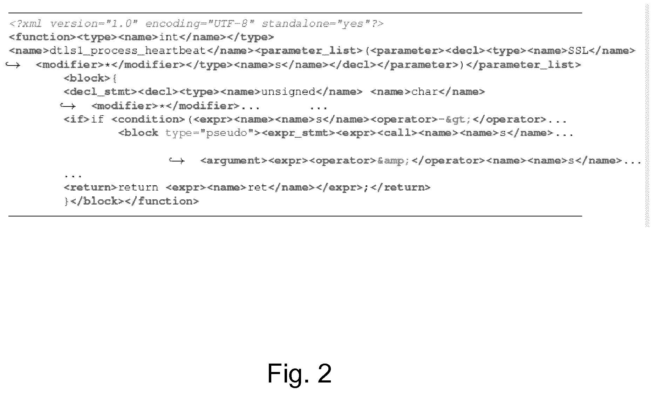

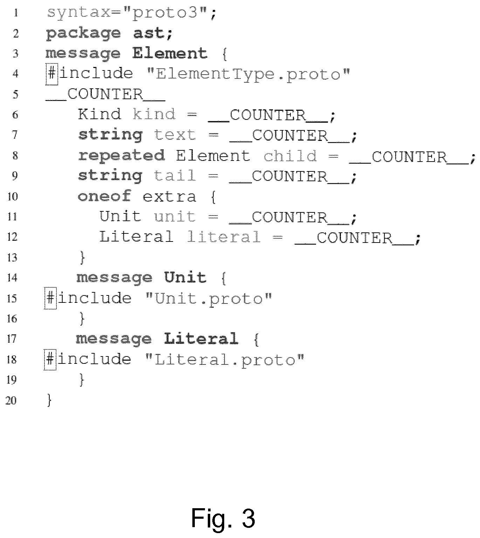

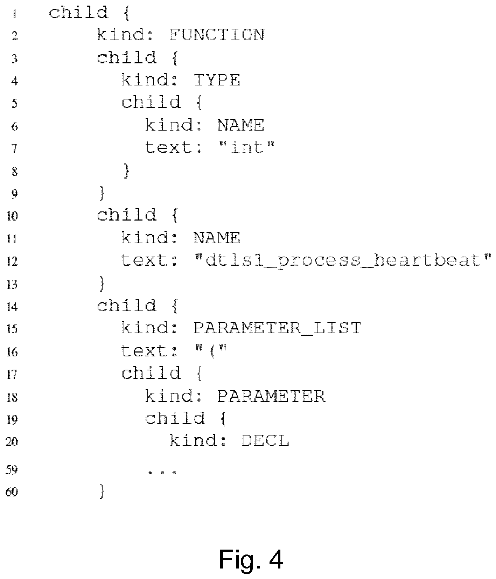

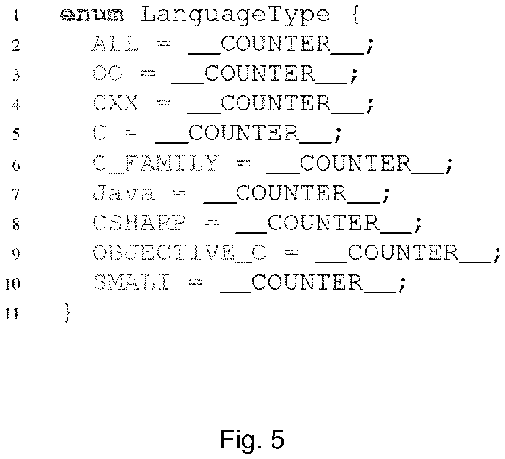

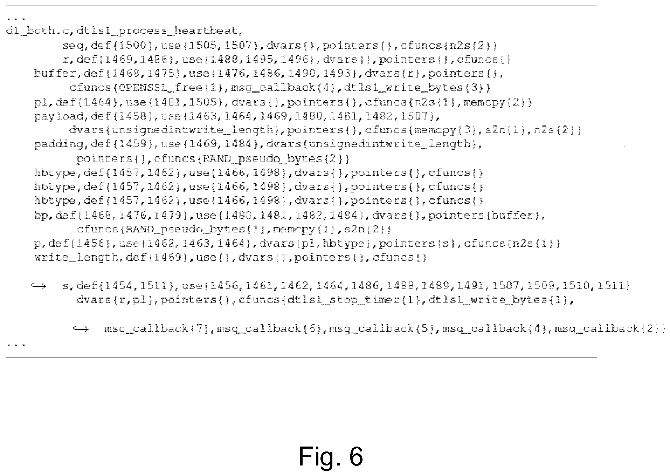

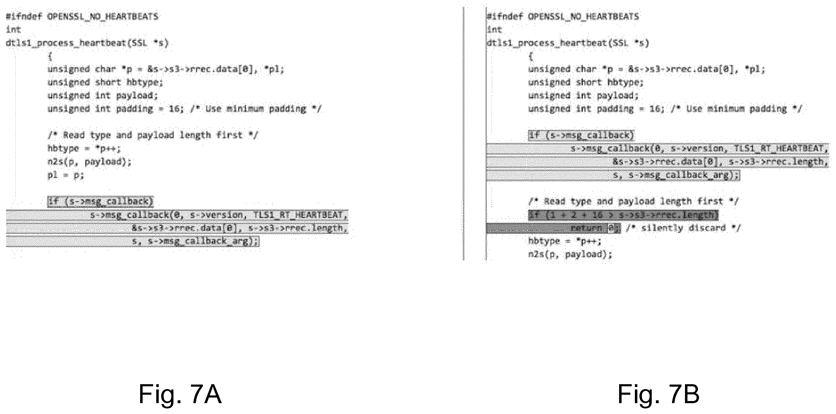

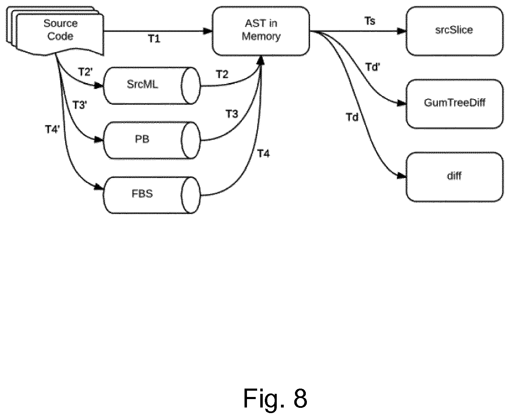

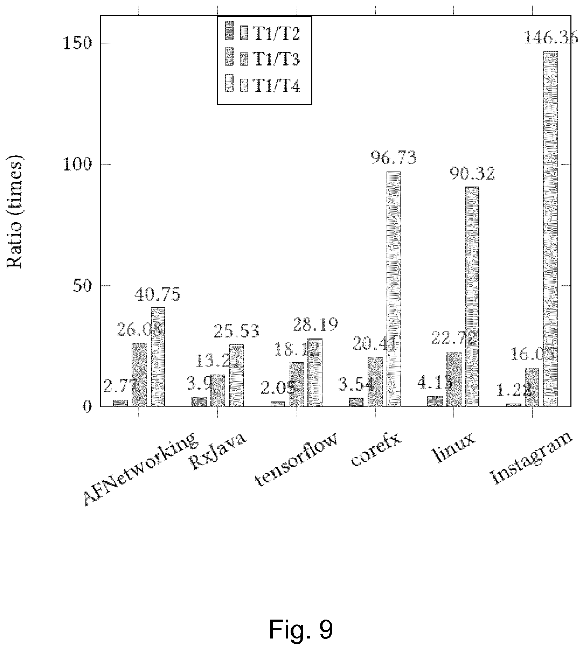

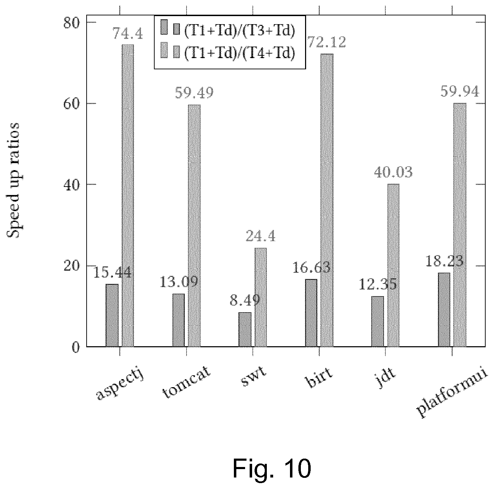

Embodiments of the present invention will now be described with reference to the accompanying drawings, in which:
▪ Fig. 1 shows an extract of d1_both.c which has 1609 LOC or 59,740 bytes
▪ Fig. 2 shows CSTs of the code of Fig. 1 in SrcML, which is 217,751 bytes
▪ Fig. 3 shows an excerpt of the main Protobuf specification
▪ Fig. 4 shows a textual dump of the binary fAST for the function signature int dtlsl_process_heartbeat (SSL *s). The PB size of d1_both.c reduces to 118,499 bytes, more efficient in size than XML.
▪ Fig. 5 shows an excerpt of the PB specification for programming languages: here preprocessing tool cpp is used to generate auto increment number _COUNTER_ for the fields in the enum structure LanguageType. As one can see, all object-oriented programming languages supported by srcml can be supported by the present invention.
▪ Fig. 6 shows slices of the program IRs in Fig. 1 produced by srcSlice on IRs in Fig. 2, numbers in def/use sets are the line numbers in the code of Fig. 1.
▪ Figs. 7A and 7B show the use of GumTreeDiff to display tree-based differences.
▪ Fig. 8 illustrates what to measure to evaluate the efficiency of IRs.
▪ Fig. 9 shows the speed up ratios of loading SrcML (=T1/T2), PB (=T1/T3) and FBS (=T1/T4).
▪ Fig. 10 shows the speed up ratios achieved by loading code structures from PB (=(T1+Td)/(T3+Td)), and by FBS ( = (T1+Td)/(T4+Td)), rather than parsing again.

### DETAILED DESCRIPTION OF THE DRAWINGS

Aspects and embodiments of the present invention will now be discussed with reference to the accompanying figures. Further aspects and embodiments will be apparent to those skilled in the art.

The inventors of the present invention aimed to address the problems associated with the prior art by considering three questions:
(i) Can a flattened binary form represent recursive code structures and interoperate with other programming tools?
(ii) If yes, what increase in speed can be achieved by using binary structures?
(iii) How much size reduction can result from removing unnecessary information?

Question (i) is related to round-trip engineering, i.e. converting two or more software related artefacts such as source code and binary intermediate representations in such a way that enables e.g. conversion of the textual source code into the binary intermediate representation is reversible, i.e. the binary intermediate representation can be converted accurately back into the original source code.

In the embodiment described in detail in the present application, alternative binary intermediate representations, referred to herein as flattened abstract syntax trees (fAST), are generated using protobuf*⁹* or flatbuffers*¹⁰*. The binary intermediate representations so generated are expressive enough to flatten the ASTs to load them back into memory without the requirement for further parsing, and are efficient enough to access by programming tools through the generated application programming interfaces (APIs).
⁹ Google, "Protocol Buffers, Google's data interchange format," 2017, https://github.com/google/protobuf.
¹⁰ Google, "Flat Buffers, a cross-platform memory efficient serialization library," 2017, http://google.github.io/flatbuffers/.

Before providing details of the method used by the present inventors, an example is discussed which demonstrates various requirements for representing the code.

Textual representation of source code are typically nested. As shown in Fig. 1 by a patch of the vulnerability of OpenSSL C library (CVE-2014-0160), where a pointer subscript expression accesses an array element beyond allocated array bounds. Buffer overflow problems are typically discovered by combining static and dynamic analysis¹¹. It is harder for programmers to spot them. Interoperability of IRs, therefore, enables programmers to comprehend such tool-suggested changes. An XML representation (aka. SrcML) of the code snippet is shown partially in Figure 2, which is produced by srcml using the default command option srcml di_both.c -o d1_both.xml. As a result, it preserves all the concrete syntax of the original program, including the layout; and it is possible to extract the source code from the IRs by simply another command: srcml d1_both.xml.
¹¹ B. Kiss, N. Kosmatov, D. Pariente, and A. Puccetti, "Combining static and dynamic analyses for vulnerability detection: Illustration on heartbleed," in Hardware and Software: Verification and Testing - 11th International Haifa Verification Conference, HVC 2015, Haifa, Israel, November 17-19, 2015, Proceedings, 2015, pp. 39-50. [Online]. Available: https://doi.org/10.1007/978-3-319-26287-1_3

Although SrcML is equivalent to the source code as an IR of the concrete syntax tree, it is clear that spaces are wasted on the XML tags and the details that may not be necessary for certain problem analysis. In this particular case, for example, one may only require to know how the value of the array subscript was computed by this slicing criteria.

Now we turn to the approach of the present invention, and discuss question (i) above, i.e. whether it is possible to convert structured code into flattened binary representations. In order to address this, a systematic engineering approach is followed for flattening hierarchical code into binary intermediate representations.

To handle semi-structured data, Google has introduced the approach to serialize them into binary formats which are readable by well-defined protocols or schemas. From these schemas, APIs are generated for tools to manipulate the binary files. There are two ways in which this may be achieved.

Protocol buffers (protobuf, or PB hereafter) treat the data as a stream of messages according to predefined protocol specification, and generates APIs in different programming languages to integrate them with custom tools. Given that the protocol specifications are predefined, it is possible to know the minimal amount of storage for basic data types. For example, if a field uses an enumerated type or limited number of enumerators, it is no longer necessary to store each enumerator as a string label. Instead a byte could be used in case there are no more than 256 kinds.

Flattened buffers (flatbuffers, or FBS hereafter) follow the standard of interface definition language to specify data structures as a variable length one-dimensional array, where cross-referencing pointers to structures fields are encoded as integer offsets to the elements on the flattened array. Since there is no cross-referencing at loading time, a single call fread can load the entire binary representation into memory extremely quickly.

Using SrcXML in between FBS and fAST, FBS can be translated back and forth to PB by invoking the built-in API methods. Next, PB is used to describe the intermediate representations.

PB was designed as an efficient substitution for XML. ASTs in intermediate representations can be represented in XML (e.g. SrcML), so the inventors of the present invention decided to try to express such ASTs in PB. However, in existing uses of protobuf, the message protocols are typically definitions of records, rather than trees. As a result, it was necessary to create a recursive schema. This was done by engineering the PB specification based on the ANTLR4 grammar production rules used by srcML. A simplified form of the main specification file is shown in Fig. 3, where the preprocessing tool cpp is used to generate a unique number_COUNTER_ for the fields required in the PB structure. For extensibility, the #include pragma is reused in cpp pre-processor so that different pieces of PB structures can be maintained independently.

Using the generative compilers protoc and flatc provided by the two Google projects, the specification is translated into APIs to save or to load data from/into the corresponding intermediate representations. In the present context, the APIs are mainly the building blocks and operations to assemble/disassemble piece-by-piece the elementary fields into structures. A large proportion of the inventors' implementation is to specify 440 kinds of elements in the SrcML or ANTLR4 grammars, which makes the PB representation more interoperable, i.e. different tools can act on the same PB by invoking the built-in APIs. In Fig. 3, the oneof operator essentially defines a union type so that additional information about the sub-types can be added to enrich the structure during evolution. The enumeration types such as Kind are introduced to provide extensibility to the structure, where additional kinds of AST elements could be introduced without changing the basic schema of code structures. Note that the repeated sub-element child is essentially recursive, allowing the tree structure to be flattened into records of such messages. The other two fields text and tail are specific to XML structures. They keep the original values of the lexical tokens associated respectively to the element itself, or before the next sibling or parent element.

For example, the statement int dtls1_process_heartbeat (SSL*s) of dl_both.c in Fig. 1 can be expressed as protobuf format (i.e. fAST hereafter), which is shown in Fig. 4.

Since the modifications to srcML are small, it is straightforward to check whether they support all grammar rules of the 5 supported programming languages: Java, C, C++, C#, Objective C. The ElementType.proto in this case (as shown in Fig. 5) needs to support all kinds of XML elements (or non-terminals in the parsing terminology). To check that the fAST is indeed equivalent to the code representation, all information of SrcML is kept on the binary structure of the CSTS. In addition, an efficient routine is created to reproduce SrcML as well as the source code by navigating the fAST recursively. The output of such navigation is the same, verbatim, as the original source code. Another advantage of reusing srcML is that the binary structures do not need to be at the root level of compilation units. A method, a statement, or even just an expression, could be the root element of SrcML, even if the source is not syntactically correct.

Applications of the present invention to two program analysis tasks are now set out, as well as other applications such as program classification using deep learning.

Firstly, program slicing. Having intermediate representations externalized as SrcML, it is possible for program slicing tools such as srcSLice to establish the program slices directly from the IRs without having to parse the code again. Fig. 6 shows an excerpt of the slices involving some variables within the scope of this file (i.e. dl_both.c) and this function (i.e. dtisi_process_heartbeat). The results are obtained using from the srcslice tool. Each row in the excerpt shown in Fig. 6 prints the def-use chain of a variable where the line number of its definition statement is depended by a set of line numbered statements, and lists zero to many dependent variables. Detailed semantics of these slicing records is beyond the scope of the application; however, the examples shown here illustrate the need for having interoperability amongst the parsing and program analysis tools.

Secondly, accurate diff-patching. After patching the OpenSSL vulnerability due to the buffer overflow problem in source code, it is necessary to (i) accurately locate exact related places on ASTs where the changes happen, and (ii) remove irrelevant elements from the ASTs according to program semantics such as slices, for example, which changes on the patch have modified the variables in the array subscript expression. However, line-based differences are less accurate than ASTs-based differences¹². Three-based program differencing algorithms operate on the ASTs too, marking the differences on individual elements as one of 5 types of editing operations: MATCHED, ADDED, DELETED, UPDATED, and MOVED, as shown in Fig. 7. As a result the invention of the present application addresses these efficiency requirements.
¹² G. Dotzler and M. Philippsen, "Move-optimized source code tree differencing," in Proceedings of the 31st IEEE/ACM International Conference on Automated Software Engineering, ASE 2016, Singapore, September 3-7, 2016, 2016, pp. 660-671. [Online]. Available: http://doi.acm.org/10.1145/2970276.2970315

Next, program classification using deep learning. Since the protobuf and flatbuffers can generate APIs from the schema of the present invention, it paves the way to dump the efficiently loaded fASTs into a program classifier (as an example) to make use of the Python interfaces to deep learning libraries such as TensorFlow. The inventors have shown that fAST can be used to convert over 7,000 programs to a bilateral tree-based convolutional neural network to classify them by six algorithms, with over 90% accuracy.

A final application, the tool is extensible to any one of the 175 officially supported programming languages by the ANTLR4 parser generator.

Now that it has been shown that the binary intermediate representations can be generated, which address the expressiveness and interoperability requirements, we now present the results of experiments to demonstrate that the present invention also fulfils the efficiency requirement.

### EXPERIMENTAL DESIGN

For a fair comparison, a benchmark-based approach is adopted, to avoid potential biases and subjectivity. The design of the experiments follows the Goal Question Metrics (GQM) method¹³, where efficiency is the goal, parsing, slicing, differencing are the questions, and time/size are suitable metrics.
¹³ V. R. Basili, G. Caldiera, and H. D. Rombach, "The goal question metric approach," in Encyclopedia of Software Engineering. Wiley, 1994.

### Data sources

Since srcML is the baseline, representative benchmarks could include any number of C, C++, C#, Objective C, and Java projects. To evaluate parsing performance, from GitHub the most starred projects in each language category were chosen. Additionally, a project was used to evaluate the extensibility of fAST to a new programming language small and a reverse engineered Android app was chosen. Six Java projects from the Hyloc datasets¹⁴ for bug localization and two more C/C++ projects including the OpenSSL example referred to in this application. Furthermore, to evaluate the efficiency of program slicing, 15 open-source C projects were adopted, used by srcslice evaluation¹⁵ to compare faithfully with the existing work, as listed in Table 2 below.

**Table 2: Time in seconds to parse code (T1), SrcML (T2), PB (T3), FBS (T4) and respective speed up ratios**

| **Project** | **T1** | **T2** | **T3** | **T4** | **T1:T2** | **T1:T3** | **T1:T4** |
|---|---|---|---|---|---|---|---|
| AFNetworking | 6.52 | 2.35 | 0.25 | 0.16 | 2.77 | 26.08 | 40.75 |
| tensorflow | 7.61 | 3.71 | 0.42 | 0.27 | 2.05 | 18.12 | 28.19 |
| RxJava | 121.26 | 31.12 | 9.18 | 4.75 | 3.9 | 13.21 | 25.53 |
| corefx | 834.81 | 235.83 | 40.91 | 8.63 | 3.54 | 20.41 | 96.73 |
| linux | 6,020.37 | 1,456.46 | 264.94 | 66.66 | 4.13 | 22.72 | 90.32 |
| Instagram | 108.31 | 88.5 | 6.75 | 0.74 | 1.22 | 16.05 | 146.36 |

¹⁴ A. N. Lam, A. T. Nguyen, H. A. Nguyen, and T. N. Nguyen, "Combining deep learning with information retrieval to localize buggy files for bug reports (n)," in 2015 30th IEEE/ACM International Conference on Automated Software Engineering (ASE), Nov 2015, pp. 476-481.
¹⁵ H. W. Alomari, M. L. Collard, J. I. Maletic, N. Alhindawi, and O. Meqdadi, "srcslice: very efficient and scalable forward static slicing," Journal of Software: Evolution and Process, vol. 26, pp. 931-961, 2014.

To evaluate the extensibility of the invention, an Android app not including Java source code was also included. After reverse engineering from the APK file using apktool, the time to parse equivalent Smali code is measured. A small parser based on the ANTLR v3 grammar developed by the small project on GitHub, was also written, while completing the missing lexical analysis using the generated C++ API by ANTLR v4.

The reason for choosing srcML as the baseline is because of its efficient parsing and relatively simple AST outputs. Although srcML has advanced options including cascading XSL transformations, the vanilla parser options were used to compare with the present invention.

For interoperability, it would be possible to generate both PB and FBS APIs in multiple programming languages. In the present experiments, the C++ API was chosen in order to provide a like-to-like performance comparison to the baseline tool srcML which was also implemented in C++.

The experiments were carried out on a Macbook Air of early 2015 build, with 1.6 GHz Intel Core i5 processor (dual core), 8GB 1600 MHz DDR3 main memory, Intel HD Graphics 6000 card with 1.5GB memory. The machine ran macOS Sierra 10.12.3. Although a server could have performed better in the experiment, a regular laptop was selected in order to demonstrate better the present invention in a setting in which software engineers may actually utilize it.

### Metrics

To evaluate the performance metrics that matter to our evaluation, we consider time for loading the IRs into memory as the primary task for parsing and differencing. Figure 8 shows the processes of four alternative IRs and how time metrics are measured for loading them, in addition to the time for different program analysis tasks.

Since parsing activity happens frequently, the main focus was on measuring the parsing/loading time for parsing code (T1), SrcML (T2), PB (T3), and FBS (T4), rather than the unparsing/saving time (T2', T3', T4') as the overhead would not be needed once the IRs are created. In addition, the efficiency of different IRs are compared to code parsing time (T1) directly, which reports to speed up ratios, e.g., speed up of using SrcML is denoted as (T1:T2), using PB as (T1:T3) and using FBS as (T1:T4). As one can see, out of the four IRs, FBS is most time-efficient.

Therefore, when applications use parsing as one of their essential steps, the total elapsed time of these analysis (T4+ Ts) are compared when the most efficient IRs (i.e., FBS) are chosen to compare with those slicing directly on source code, (T1 +Ts):(T4+Ts). Similarly, the time for differencing before and after the FBS is used instead of parsing code, (T1+Td):(T4+Td) is computed. Finally, to evaluate the effect of reducing the size of ASTs for the slicing task, is measured the number of bytes of the fAST before and after the size reduction by saving only the necessary information for slicing, i.e., S:S'.

### RESULTS

Performance evaluation experiments were conducted in two parts. First, the time performance of SrcML parsing was measured and compared with code parsing. Secondly, the same performance metrics were measured for binary loading as compared with SrcML parsing. In this way, it was checked whether and to what extent the use of fASTs avoids the need for re-parsing overhead.

### srcML performance

Table 3 shows the time metrics for comparing four kinds of IRs. The first 5 programs in the benchmark have shown a significant speed up of parsing by using srcML parser, which varies from 2x (AFNetworking) to 5x (Linux). This suggests that srcML implementation has already considered efficiency in its design. On the other hand, the last program (Instagram) has slightly lower speed up (1.22x) because it was necessary to implement a custom way to turn Smali source into XML that has slightly more redundancy than that of SrcML.

### PB performance

All code structures were flattened into a stream of protocol messages in binary form. The results in Fig. 9 show that using PB, parsing sped up by at least 13 times. For some projects in Java (AFNetowkring) and C++ (tensorflow), the speed up ration is well over 20x for the 5 programming languages supported by SrcML. On the other hand, the Instagram project has a slightly lower speed up of 16x, but this may be attributed to the less optimized grammar for the relatively new programming language. It is clear that the PB implementation of fAST is far more efficient than parsing SrcML.

### FBS performance

Instead of storing fAST as a stream of message structures, FBS uses a really flat array to store *all* structures at different onsets, using integer indices to cross-reference to the offset of each piece. Fig. 9 highlights the speed-ups as T1/T4, which generally outperforms PB, registering at least 22x speed up for all projects, and a speed up of 150x for the Instagram project.

### PERFORMANCE IN APPLICATIONS

This section examiners how the binary flattening tool files in a tool chain for performing various program analysis tasks.

### Parsing evolving code

The data-sets are gathered from open-source software projects as a benchmark for bug localization. The tool-chain for such analysis includes an essential step to parse the code patches associated with every commit log of the bug reports. Initially, Git's internal diff and grep utilities were relied on the fetch the patches. However, the code snippets related to the commits are not accurately aligned with the syntactical rules. For example, adding or removing a variable may in fact break the code structures at the boundary of changed statements. In order to parse these changes over and over again, a costly solution would be to fetch the entire source code files touched by any change, meaningful or not, and then pipe them to a code parser. With the flexibility of SrcML, one could do a little better: instead of parsing the entire code files for every single commit in the change history, the binary representation of the changes was loaded and the smallest context of these changes (e.g., the enclosing methods). As a result, the representation of a much more precise scope of the code changes can be obtained for every bug report, which could in turn enhance the accuracy of bug localisation activities.

**Table 3: Speed up parsing patches of bug localization benchmarks**

| **Project** | **(T1+Td)** | **(T2+Td)** | **(T3+Td)** | **(T4+Td)** |
|---|---|---|---|---|
| aspectj | 81.84 | 46.78 | 5.3 | 1.1 |
| tomcat | 114.82 | 56.34 | 8.77 | 1.93 |
| swt | 554.69 | 259.34 | 65.31 | 22.73 |
| birt | 651.96 | 665.17 | 39.21 | 9.04 |
| platformui | 827.73 | 418.96 | 45.4 | 13.81 |
| jdt | 918.37 | 488.73 | 74.35 | 22.94 |

Table 3 lists the time-performance metrics as analysed using git diff/grep commands from these six projects. Note that we have not analysed all commits in these 6 repositories, instead, only those involved with a patch to known bug reports (as part of a test oracle for bug localisation). If the analysis was about all commits regardless, then the benefit would have been even greater. One can see in Fig. 10 substantial speed up ratios.

### Tree-based differencing

Tools such as mct¹⁶, MTDiff¹⁷, and GumTreeDiff¹⁸ aim to detect minimal changes from ASTs. While met relies on TXL clone detector to identify matching elements in ASTs after semantically- related normalisations, MTDiff and GumTreeDiff optimise directly on the length of tree-based editing scripts. As a result, all these tools produce much more accurate diff results than traditional line-based diff tools. On the other hand, since AST-based diff tools rely on the efficient parsing and traversal of abstract syntax tree structures, improving the efficiency of parsing ASTs may also improve the efficiency of finding their differences.

In the following experiments, the efficiency of tree-based differencing is compared (e.g., GumTreeDiff) as a baseline, with respect to the time of fAST-based differencing. Since the entire Git repositories are to be compared, rather than the predefined commits in the Hyloc datasets of Java projects, two projects of different programming languages and size were intentionally chosen. Git-DL is a newly created C++ project with fewer changes, while OpenSSL, the running example introduced in earlier sections, contains as many as 20433 changes.

**Table 4: Tree-based differencing gets faster using fAST IRs**

| **Project** | **no. commits** | **(T1+Td)** | **(T4+Td)** | **(T1+Td'):(T4+Td')** |
|---|---|---|---|---|
| aspectj | 90 | 108.89 | 2.9 | 37.55 |
| tomcat | 20,433 | 23,120.8 | 652.63 | 35.43 |

Note that instead of comparing the pairs of entire compilation units, which is more trivial for getting syntactically correct parsing trees, only the hunks (i.e., continuous blocks of changed line(s) identified by line-based Git differencing tools) and tree-based differences within them were compared. Since srcML can parse grammatically incomplete code snippets, one could benefit from computing more accurate tree-based differences on much smaller inputs (as
¹⁶ Y. Yu, T. T. Tun, and B. Nuseibeh, "Specifying and detecting meaningful changes in programs," in 26th IEEE/ACM International Conference on Automated Software Engineering (ASE 2011), Lawrence, KS, USA, November 6-10, 2011, 2011, pp. 273-282. [Online]. Available: http://dx.doi.org/10.1109/ASE.2011.6100063.
¹⁷ G. Dotzler and M. Philippsen, "Move-optimized source code tree differencing," in Proceedings of the 31st EEE/ACM International Conference on Automated Software Engineering, ASE 2016, Singapore, September 3-7, 2016, 2016, pp. 660-671. [Online]. Available: http://doi.acm.org/10.1145/2970276.2970315 ¹⁸ J. Falleri, F. Morandat, X. Blanc, M. Martinez, and M. Monperrus, "Fine-grained and accurate source code differencing," in ACM/IEEE International Conference on Automated Software Engineering, ASE'14, Vasteras, Sweden - September 15 - 19, 2014, 2014, pp. 313-324. [Online]. Available: http://doi.acm.org/10.1145/2642937.2642982 opposed to the entire units). Even so, it took quite some time to run GumTreeDiff on all pairs of changed hunks for a large repository, and the use of fAST could significantly improve the speed without losing accuracy. In Table 5, the 2nd column shows the total time took to run GumTreeDiff on all the pairs of changed code snippets; the 3rd column shows the total time took to run the same algorithm on fAST instead of running on the original code.

**Table 5: For the benchmark of forward slicing [7], the table lists elapsed time (seconds) of srcSlice (=Ts) and fastSlice (=Ts'); consumed space (in bytes) of original (=S) and partial (=S') fAST produced by fastSlice are compared.**

| **Project** | **(T1+Ts)** | **(T4+Ts')** | **S** | **S'** | **(T1+Ts):(T4+Ts')** | **S:S'** |
|---|---|---|---|---|---|---|
| Clanlib-4.0.0 | 4.59 | 1.17 | 22,846,389 | 14,402,715 | 3.92 | 1.59 |
| HippoDraw-1.21.3 | 1.81 | 0.42 | 11,542,242 | 6,815,115 | 4.31 | 1.69 |
| Quantlib-0.9.7 | 7.14 | 1.66 | 49,105,223 | 32,351,122 | 4.3 | 1.52 |
| a2ps-4.10.4 | 0.77 | 0.21 | 5,596,983 | 3,009,254 | 3.67 | 1.86 |
| acct-6.5 | 0.11 | 3. 10⁻² | 745,333 | 387,837 | 3.67 | 1.92 |
| barcode-0.98 | 0.17 | 5 · 10⁻² | 1,148,239 | 667,716 | 3.4 | 1.72 |
| barcode-0.99 | 0.27 | 8 · 10⁻² | 3,282,455 | 1,674,625 | 3.38 | 1.96 |
| cvs-1.12.10 | 2.13 | 0.62 | 14,632,650 | 8,029,263 | 3.44 | 1.82 |
| dico-2.2 | 1.91 | 0.49 | 12,832,542 | 7,209,440 | 3.9 | 1.78 |
| ed-1.2 | 8 . 10⁻² | 3 . 10⁻² | 437,936 | 268,444 | 2.67 | 1.63 |
| ed-1.6 | 8 . 10⁻² | 2 . 10⁻² | 457,555 | 281,442 | 4 | 1.63 |
| enscript-1.4.0 | 0.25 | 7 · 10⁻² | 1,694,864 | 970,519 | 3.57 | 1.75 |
| enscript-1.6.5 | 0.78 | 0.21 | 5,473,008 | 2,976,911 | 3.71 | 1.84 |
| enscript-1.6.5.1 | 0.77 | 0.22 | 5,471,797 | 2,976,089 | 3.5 | 1.84 |
| enscript-1.6.5.2 | 0.77 | 0.23 | 5,472,794 | 2,976,697 | 3.35 | 1.84 |
| findutils-4.4.2 | 1.02 | 0.29 | 7,156,065 | 3,750,552 | 3.52 | 1.91 |
| libkate-0.3.8 | 0.51 | 0.13 | 3,182,850 | 1,892,895 | 3.92 | 1.68 |
| make-3.82 | 0.54 | 0.15 | 3,721,451 | 2,026,276 | 3.6 | 1.84 |
| radius-1.0 | 1.28 | 0.38 | 8,788,136 | 5,015,118 | 3.37 | 1.75 |
| which-2.20 | 7 . 10⁻² | 2 . 10⁻² | 327,804 | 164,110 | 3.5 | 2 |
| wdiff-0.5 | 5 . 10⁻² | 2 . 10⁻² | 332,128 | 171,156 | 2.5 | 1.94 |

The benchmarks in Table 5 were used for evaluating the performance of an efficient forward program slicer srcslice. They consist of 21 versions of 15 projects, measured by the original srcslice tool and our FAST enhanced slicing tool, respectively. As one can see, the time spent on parsing is relatively high compared to the time of slicing component.

Although nothing is changed in the slicing component of the srcslice tool, it has achieved that more than 2.5x speedup merely due to the optimisation of the parsing component. It is also clear that the size of the flattened partial ASTs is reduced by at least 1.52x compared to the flattened ASTs.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method, including the steps of:
receiving source code, the source code having an associated grammar;
parsing the source code to generate a first intermediate representation of the source code in the form of an abstract syntax tree;
generating a binary intermediate representation of the source code based on abstract syntax tree, wherein:
generating the binary intermediate representation of the source code comprises flattening, using a flattening application programming interface, API, the abstract syntax tree by serializing the abstract syntax tree, to generate a flattened abstract syntax tree, fAST, comprising a one dimensional binary array;
the data in the one dimensional binary array is organized according to a predetermined schema; and
the flattening API is generated, based on the predetermined schema, using a schema compiler; and
performing subsequent processing on the binary intermediate representation.

2. The method of claim 1, further including the step of generating a receiver based on the grammar of the source code, the receiver configured to receive the source code.

3. The method of claim 1, further including the step of generating a flattening API based on the predetermined schema.

4. The method of claim 1, wherein:
the schema compiler is based on protocol buffers, herein "protobuf"; and
the generated flattening API is configured to flatten the first intermediate representation or the source code into a stream of messages, each of the messages being in binary form, the stream of messages forming the binary intermediate representation.

5. The method of claim 4, wherein data representing the source code or the first intermediate representation is grouped by sub-structures, the sub-structures referring to each other through pointers.

6. The method of claim 1, wherein:
the schema compiler is based on flattened buffers, herein "flatbuf"; and
the generated flattening API is configured to generate a binary intermediate representation in the form of a single binary array.

7. The method of claim 6, wherein the binary array includes fields representing an offset, the offset used to identify the location of another field in the array.

8. The method of claim 1, wherein the source code is in the form of raw data representing a genome sequence.

9. The method of claim 8, wherein the raw data representing the genome sequence is in the form of a FASTA representation.

10. The method of claim 9, further including the step of converting the FASTA representation of the raw data representing the genome sequence into a SAM/BAM representation.

## Patentansprüche

1. Computerimplementiertes Verfahren, einschließlich der folgenden Schritte:
Empfangen von Quellcode, wobei der Quellcode eine zugeordnete Grammatik aufweist;
Parsen des Quellcodes, um eine erste Zwischen-Repräsentation des Quellcodes in Form eines abstrakten Syntaxbaums zu erzeugen;
Erzeugen einer binären Zwischen-Repräsentation des Quellcodes basierend auf dem abstrakten Syntaxbaum, wobei:
das Erzeugen der binären Zwischen-Repräsentation des Quellcodes ein Abflachen des abstrakten Syntaxbaums unter Verwendung einer abflachenden Programmierschnittstelle (API) durch Serialisieren des abstrakten Syntaxbaums umfasst, um einen abgeflachten abstrakten Syntaxbaum (fAST) zu erzeugen, der ein eindimensionales binäres Array umfasst;
die Daten in dem eindimensionalen binären Array gemäß einem vorbestimmten Schema organisiert sind; und
die abflachende API basierend auf dem vorbestimmten Schema unter Verwendung eines Schemakompilierers erzeugt wird; und
Durchführen einer darauffolgenden Verarbeitung auf der binären Zwischen-Repräsentation.

2. Verfahren nach Anspruch 1, das ferner den Schritt des Erzeugens eines Empfängers basierend auf der Grammatik des Quellcodes umfasst, wobei der Empfänger konfiguriert ist, um den Quellcode zu empfangen.

3. Verfahren nach Anspruch 1, das ferner den Schritt des Erzeugens einer abflachenden API basierend auf dem vorbestimmten Schema umfasst.

4. Verfahren nach Anspruch 1, wobei:
der Schemakompilierer auf Protokollpuffern, hierin "Protobuf", basiert; und
die erzeugte abflachende API konfiguriert ist, um die erste Zwischen-Repräsentation oder den Quellcode in einen Strom von Nachrichten abzuflachen, wobei jede der Nachrichten in binärer Form vorliegt, wobei der Strom von Nachrichten die binäre Zwischen-Repräsentation bildet.

5. Verfahren nach Anspruch 4, wobei Daten, die den Quellcode oder die erste Zwischen-Repräsentation darstellen, durch Teilstrukturen gruppiert sind, wobei sich die Teilstrukturen durch Hinweisadressen aufeinander beziehen.

6. Verfahren nach Anspruch 1, wobei:
der Schemakompilierer auf abgeflachten Puffern, hierin "Flatbuf", basiert und
die erzeugte abflachende API konfiguriert ist, um eine binäre Zwischen-Repräsentation in Form eines einzelnen binären Arrays zu erzeugen.

7. Verfahren nach Anspruch 6, wobei das binäre Array Felder umfasst, die einen Versatz darstellen, wobei der Versatz verwendet wird, um die Position eines anderen Felds in dem Array zu identifizieren.

8. Verfahren nach Anspruch 1, wobei der Quellcode in Form von Rohdaten vorliegt, die eine Genomsequenz darstellen.

9. Verfahren nach Anspruch 8, wobei die Rohdaten, die die Genomsequenz darstellen, in Form einer FASTA-Repräsentation vorliegen.

10. Verfahren nach Anspruch 9, das ferner den Schritt des Konvertierens der FASTA-Repräsentation der Rohdaten, die die Genomsequenz darstellen, in eine SAM/BAM-Repräsentation umfasst.

## Revendications

1. Procédé mis en œuvre par ordinateur, comprenant les étapes consistant à :
recevoir un code source, le code source présentant une grammaire associée ;
analyser le code source pour générer une première représentation intermédiaire du code source sous la forme d'un arbre de syntaxe abstraite ;
générer une représentation intermédiaire binaire du code source sur la base d'un arbre de syntaxe abstraite, dans lequel :
la génération de la représentation intermédiaire binaire du code source comprend l'aplatissement, à l'aide d'une interface de programmation d'application d'aplatissement, API, de l'arbre de syntaxe abstraite en sérialisant l'arbre de syntaxe abstraite, pour générer un arbre de syntaxe abstraite aplati, fAST, comprenant un réseau binaire unidimensionnel ;
les données dans le réseau binaire unidimensionnel sont organisées selon un schéma prédéterminé ; et
l'API d'aplatissement est générée, sur la base du schéma prédéterminé, à l'aide d'un compilateur de schémas ; et
effectuer un traitement ultérieur sur la représentation intermédiaire binaire.

2. Procédé selon la revendication 1, comprenant en outre l'étape consistant à générer un récepteur sur la base de la grammaire du code source, le récepteur étant configuré pour recevoir le code source.

3. Procédé selon la revendication 1, incluant en outre l'étape consistant à générer une API d'aplatissement sur la base du schéma prédéterminé.

4. Procédé selon la revendication 1, dans lequel :
le compilateur de schémas est basé sur des tampons de protocole, ici « protobuf » ; et
l'API d'aplatissement générée est configurée pour aplatir la première représentation intermédiaire ou le code source en un flux de messages, chacun des messages étant sous forme binaire, le flux de messages formant la représentation intermédiaire binaire.

5. Procédé selon la revendication 4, dans lequel les données représentant le code source ou la première représentation intermédiaire sont regroupées par des sous-structures, les sous-structures se référant les unes aux autres par l'intermédiaire de pointeurs.

6. Procédé selon la revendication 1, dans lequel :
le compilateur de schémas est basé sur des tampons aplatis, ici « flatbuf » ; et
l'API d'aplatissement générée est configurée pour générer une représentation intermédiaire binaire sous la forme d'un seul réseau binaire.

7. Procédé selon la revendication 6, dans lequel le réseau binaire comprend des champs représentant un décalage, le décalage étant utilisé pour identifier l'emplacement d'un autre champ dans le réseau.

8. Procédé selon la revendication 1, dans lequel le code source est sous la forme de données brutes représentant une séquence de génome.

9. Procédé selon la revendication 8, dans lequel les données brutes représentant la séquence de génome sont sous la forme d'une représentation FASTA.

10. Procédé selon la revendication 9, comprenant en outre l'étape consistant à convertir la représentation FASTA des données brutes représentant la séquence de génome en une représentation SAM/BAM.
